(19) Europäisches Patentamt / European Patent Office / Office européen des brevets

(11) **EP 4 704 366 A1**

(12) **EUROPEAN PATENT APPLICATION**

(43) Date of publication:
04.03.2026 Bulletin 2026/10

(21) Application number: 24196525.0

(22) Date of filing: **26.08.2024**

(51) International Patent Classification (IPC):
**H04L 9/08** *(2006.01)*     **H04L 9/32** *(2006.01)*
**H04L 9/00** *(2022.01)*     **H04L 9/40** *(2022.01)*

(52) Cooperative Patent Classification (CPC):
**H04L 9/0855; H04L 9/3247; H04L 9/40; H04L 9/50**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Adva Network Security GmbH
12489 Berlin (DE)**

(72) Inventors:
• **Griesser, Helmut
12489 Berlin (DE)**
• **Mullan, Ciarán
12489 Berlin (DE)**

(74) Representative: **Bratovic, Nino Maria
Bratovic IP
Lissi-Kaeser-Straße 20
80797 München (DE)**

(54) **METHOD AND SYSTEM FOR VERIFYING A CRYPTOGRAPHIC KEY FORWARDING PATH IN A QUANTUM KEY DISTRIBUTION NETWORK**

(57) The invention provides a method for verifying a key forwarding path of at least one cryptographic key in a quantum key distribution, QKD, network, and a system for the verification of the key forwarding path of at least one cryptographic key, the method comprising at least steps of:

selecting (using either a centralized or a decentralized method) a number of QKD nodes of the QKD network, which define a key forwarding path of the at least one cryptographic key;

transmitting to each of the selected QKD nodes data indicating at least partial information about the key forwarding path of the at least one cryptographic key;

generating, by each selected QKD node, a digital signature, wherein the digital signature contains at least the data indicating at least partial information about the key forwarding path of the at least one cryptographic key;

transmitting, by each selected QKD node (N1-N9), the digital signature generated at that selected QKD node (N1-N9); and verifying the key forwarding path of the at least one cryptographic key through a verification of the transmitted digital signatures.

Fig. 5

EP 4 704 366 A1

**Description**

FIELD OF THE INVENTION

The present invention relates to a method for verifying the key forwarding path of cryptographic keys while being distributed in a quantum key distribution network, QKDN, for instance a satellite QKDN or a QKDN based on fiber communication. The invention also provides a system for the verification of the key forwarding path of cryptographic keys.

BACKGROUND OF THE INVENTION

The main goal of a cryptographic protocol is to guarantee secure communications between legitimate parties against malicious attacks of third parties. One of the central steps in any cryptographic protocol is to provide a safe distribution of cryptographic keys among the legitimate parties. This is termed the key establishment problem. Solutions to this problem are diverse in their level of sophistication.

In asymmetric key cryptography, for instance, the legitimate parties use a private and a public key, where the public key is exchanged between the parties. However, asymmetric key cryptography protocols are only computationally secure, i.e., they rely on the computational difficulty of solving a complex mathematical problem. Such a problem should be difficult enough that the computational power of a third party makes an attack infeasible. However, with more sophisticated computers, and in particular with the advent of quantum computers, some of the cryptographic methods deemed today as computationally secure may cease to be so.

Unconditionally secure or information-theoretically secure cryptographic protocols are protocols which can be proven to be secure against an arbitrary attack of a third party based on theoretical considerations. However, they are generally more demanding.

Quantum key distribution (QKD) is a cryptographic key distribution scheme which provides an unconditionally secure key establishment solution based on the laws of quantum mechanics. In this scheme, information is sent with qubits, which are intrinsically sensitive to a third-party attack. The key exchange is secure because a third-party attack always alters the properties of the qubits in a detectable way.

A QKD link directly connecting legitimate parties has so far technological limitations, which typically limits such a point-to-point communication, e.g., to distances no larger than 100 km for fiber communications. This distance limitation can be circumvented with QKD networks, where intermediate nodes and links are provided to establish a communication between two end applications. There are currently a number of projects that use QKD networks in metropolitan areas and also long-haul environments. For these implementations one typically employs software-defined networks, where the different QKD nodes can be managed and controlled, in particular to determine the path or route to be taken by the cryptographic key within the QKD network to connect the end applications.

Under some circumstances, it is desirable for the end applications to verify the path taken by a cryptographic key within the QKD network. This path verification makes it easier, for instance, to identify and isolate communications that went through a node that turned out to be compromised. It also makes sure that certain nodes are not skipped, for instance nodes that comprise a firewall. With long-haul networks that cross national borders it is also important to make sure that certain key distributions are routed as intended, e.g., within certain geographic areas and without crossing certain national borders. Path verification can in these cases guarantee that the key distribution has been routed as expected.

There are very few instances of path verification in QKD networks in the prior art. Most of them rely on the exchange of secrets between a small amount of QKD nodes. There is therefore a need to provide a more general path verification method and system to cover larger networks.

SUMMARY OF THE INVENTION

It is an objective of the present invention to provide a method and system for the verification of the path or route taken by a cryptographic key within a quantum key distribution network that connects a number of end applications (or users), which typically employ the distributed cryptographic key for the encryption and decryption of communications between them. These objectives are fulfilled by the subject matter of the independent claims.

Therefore, according to a first aspect, the present invention provides a method for verifying a key forwarding path (or routing) of at least one cryptographic key in a quantum key distribution network, the method comprising at least the steps of:

  selecting (using either a centralized or a decentralized method) a number of QKD nodes of the QKD network, which define a key forwarding path of the at least one cryptographic key;
  transmitting to each of the selected QKD nodes data indicating the key forwarding path of the at least one cryptographic key;

generating, by each selected QKD node, a digital signature, wherein the digital signature contains at least the data indicating at least partial information about the key forwarding path of the at least one cryptographic key; transmitting, by each selected QKD node (N1-N9), the digital signature generated at that selected QKD node (N1-N9); and verifying the key forwarding path (or routing) of the at least one cryptographic key through a verification of the transmitted digital signatures.

The general architecture of QKD networks comprises at least an infrastructure layer, where a number of QKD nodes are contained, and an application layer, which contains the end applications. In some architectures there is also a control/management layer, which contains a QKD controller.

QKD nodes are computational units inside a QKD network, which are configured to generate and exchange cryptographic keys with other nodes or with an end user via QKD links and key relay. QKD nodes can be user nodes (belonging to the users or end applications that want to establish a secure communication using the distributed cryptographic keys) as well as relay nodes, which are configured to relay keys according to a key relay scheme within the QKD network.

A QKD node contains a number of physical devices for the execution of different functions. A QKD node comprises at least a transmitter unit, a receiver unit and a key management unit. It can further comprise a number of optical switches and a number of multiplexers and demultiplexers. The transmitter and receiver units can generate local secret keys in a quantum layer. The key management unit is a server which manages the generated local secret keys, can store them in a database and forward them to cryptographic applications. Multiplexers and demultiplexers are used to bundle and separate the multiple (both classical and quantum) channels arriving and leaving the QKD node.

The transmitter units and receiver units of the QKD nodes are connected by QKD links, which comprise a classical and a quantum channel, which do not necessarily have the same physical implementation. The quantum channel provides the exchange of qubits, normally through optical fiber but also through free air, and the classical channel is used, e.g., for synchronization and key distillation. The key management units of the different QKD nodes are connected with key manager links through a classical channel.

For long-range key distribution one employs a trusted relay based trusted-node QKD network, where secret keys are generated for each QKD link and stored in the QKD nodes that the QKD link connects. Keys are forwarded according to a key forwarding algorithm. This can be a hop-by-hop process of forwarding the original key through a chain of concatenated QKD links using a one-time pad technique, such that the communication between the QKD nodes is secure. The invention has, however, a broader scope and is independent of the particular chosen key forwarding algorithm. Likewise, it is of no relevance how the cryptographic key is generated. For example, it could be generated by an end application entity (e.g., SAE) or a key management entity (KME) using a random number generator, pulled via QKD, or provided in some other way.

The QKD network controller can be any device that can process information, such as a centralized server, and capable of orchestrating the QKD nodes by selecting the QKD nodes that are to act as relay nodes in the routing of cryptographic keys within the QKD network. The QKD controller acts also as a manager of the QKD nodes and can exchange information with them, e.g., through an API (application programming interface).

A path or a routing of a cryptographic key (a key forwarding path) may be understood to be a sequence of QKD nodes that link the end applications and forward the cryptographic key therebetween. Typically, the cryptographic key is to be transmitted from a first end application in communication with a starting QKD node, to a second end application in communication with a terminal QKD node. The routing or key forwarding path includes a selection of a contiguous path between the starting QKD node and the terminal QKD node.

The QKD nodes forwarding the key(s) can be selected by a QKD network controller (centralized method) based on a number of possible criteria, such as node availability, node capacity, or geographic boundary conditions. The key forwarding path can alternatively also be determined without the presence of a QKD network controller. In this scenario, the key forwarding path is dynamically generated, where each QKD node selects or determines the next QKD node along the key distribution path (decentralized method). As an example, the OSPF (Open Shortest Path First) or a similar routing protocol may be employed.

The data indicating at least partial information about the key forwarding path or routing transmitted to the selected QKD nodes can be any information about or related to the path, for instance, a list with a number of the selected QKD nodes (not necessarily all QKD nodes defining the key forwarding path). This list does not necessarily have to provide information about the QKD links either, i.e., how the QKD nodes are linked to form the path.

Each QKD node generates a digital signature in order for the end applications to verify it and thereby verify the key forwarding path. Each QKD node signs with a node-specific private key. The digital signatures can be performed with any of the public key protocols usually employed for digital signatures.

One of the key concepts of the present invention is that each of the QKD nodes that are selected as relay nodes for a cryptographic key distribution sign the key with information about the routing or key forwarding path. This signature can be verified by the end applications, thus providing the verification that the selected QKD node indeed forwarded the cryptographic key, as intended. This verification mechanism is computationally secure against eavesdropping or malicious attacks. Even if a third party gains knowledge of a signature, the contents of the underlying message remain hidden. Likewise, if a third party would try to impersonate a QKD node of the path, it should forge not just the signature of that QKD node and modify the information about the path, but do the same with the signatures of the rest of the QKD nodes, which is computationally infeasible.

Here and in the following, for some (especially longer) terms abbreviations (such as "QKD" for "quantum key distribution") are used together with the term itself. In all cases, the term itself and the corresponding abbreviation shall be understood to be equivalent.

Further technical considerations, advantages as well as variants and refinements are presented in the following, in particular in the dependent claims as well as in the specification with respect to the drawings and the drawings themselves.

In some advantageous embodiments, variants or refinements of embodiments of the method according to the first aspect of the invention, each digital signature comprises information about the at least one cryptographic key, a public identifier of the QKD node that generated the digital signature, and at least information about the preceding and the succeeding QKD node along the key forwarding path. Thus, at the key management unit j inside the jth QKD node of the path selected by the QKD controller, the message $M_j$ to be signed comprises at least the following entries

$$M_j=(K, \text{"path"}, \text{"OID}_j\text{"})$$

where K is the cryptographic key to be exchanged along the selected path. "path" can be an alphanumeric combination that identifies the selected QKD nodes along the path to be followed by the cryptographic key. For instance, "1358" could indicate that the QKD nodes tagged as number 1, number 3, number 5 and number 8 have been selected as defining the key forwarding path. QKD nodes do not necessarily have to include the whole key forwarding path. Node j should contain, inside "path", at least information about the j-1 node and the j+1 node. "$\text{OID}_j$" is an object identifier for the key management unit j, such that when the signature is verified by the end applications, the signature is linked to the key management unit j.

In some advantageous embodiments, variants or refinements of embodiments of the method according to the first aspect of the invention, the key forwarding path of the at least one cryptographic key is specified by a QKD network controller or by one of the end applications (at an application layer). The choice may depend on the characteristics of the QKD network. The end applications might have an interest in choosing and then checking (through the verification of the digital signatures of each of the selected QKD nodes) which nodes have been involved in distributing the key. This can have different motivations, e.g., to make sure that certain relay nodes are not to be used, for instance when for key distribution in a long-haul network certain geographic restrictions need to be ensured. Some of the relay nodes can be selected based on certain security considerations (e.g., some firewalls) that have to be fulfilled by going through some specific QKD nodes.

In some advantageous embodiments, variants or refinements of embodiments of the method according to the first aspect of the invention, the key forwarding path of the at least one cryptographic key is specified dynamically, wherein each of the selected QKD nodes is configured to locally select the succeeding QKD node along the key forwarding path. In these embodiments, which do not require the intervention of a QKD network controller, the selection of QKD nodes can be done based, e.g., on the information of local routing tables. In these embodiments, the "path" entry in the message sent by the QKD node j may contain information about the preceding QKD nodes (at least information about the QKD node j-1) and information about the QKD node j+1, i.e., the one selected locally by the QKD node j.

In some advantageous embodiments, variants or refinements of embodiments of the method according to the first aspect of the invention, each of the selected QKD nodes transmits at least the digital signature it generated to another selected QKD node according to the routing (or key forwarding path). In some preferred embodiments of the invention, the digital signature at the QKD node j is generated based on a hashed value of a message containing at least

$$M_j=(K, \text{"path"}, \text{"OID}_j\text{"})$$

as

$$S_j=\text{Sign}[H(M_j)]$$

where H(x) is a hash function (also referred to as a one-way function), which has to be known by the entity that verifies the signature (the end applications). This hash function does not need to be the same for each of the QKD nodes. The end application thus computes $M_j$ and verifies the signature $S_j$.

According to these embodiments, the signature of the QKD node j, $S_j$, can be transmitted to the QKD node j+1. The signatures $S_j$ and $S_{j+1}$ get then transmitted to the relay node j+2, and so on. The last relay node then transmits a digital signature (to the QKD controller or to the end applications), which comprises the digital signatures of all the preceding relay nodes. In these embodiments the digital signatures follow the path of the distributed cryptographic key. We will refer to these embodiments as those in which the digital signatures are transmitted along the key forwarding plane.

In some advantageous embodiments, variants or refinements of embodiments of the method according to the first aspect of the invention, each of the selected QKD nodes transmits the generated digital signature to a QKD network controller, who forwards them to the end applications for verification.

Depending on QKD node capacity, concatenating the signatures of the QKD nodes might not be desirable, since it requires a higher data demand for a QKD node the closer it is to the end application at the end of the path. In these embodiments, this communication overhead can be ameliorated if each node submits its own signature to the QKD network controller. This has the advantage that the signatures can be collectively gathered by the QKD network controller, who can then send them in one communication to the end applications. We will refer to these embodiments as those in which the digital signatures are transmitted along the control plane.

In some advantageous embodiments, variants or refinements of embodiments of the method according to the first aspect of the invention, the method further comprises obtaining at least one QKD network condition by a QKD network controller, and dynamically changing the routing by selecting, at least partially, different QKD nodes based on the at least one obtained QKD network condition.

The QKD controller can select the path according to different criteria, among others the node capacity and the node availability, but also based on preferences of the end applications (restrictions on the geographical locations of the QKD nodes or minimal security requirements of the QKD nodes, e.g., for the generation of the digital signatures). In some cases, however, a selected QKD node can become unavailable, or its anticipated availability can no longer be granted. These are two instances of a QKD network condition that the QKD network controller can obtain (e.g., through an API with the different QKD nodes) and which can prompt the generation of a different path. According to some preferred embodiments of the invention, upon the occurrence of any such or any other QKD network condition, the QKD network controller can plan a re-routing of the key distribution in real time, where at least the affected QKD node is replaced. This dynamical re-routing involves sending information by the QKD network controller to the newly selected QKD nodes about the new path, but also disabling no longer needed QKD nodes and updating already selected QKD nodes with the new path. For instance, an initially determined path could be "12468", involving the QKD nodes tagged as 1, 2, 4, 6 and 8. While distributing the cryptographic key the QKD node 4 turns out to be idle. A new route "12578" is then planned, in which the QKD nodes 4 and 6 are no longer needed and are replaced by the QKD nodes 5 and 7. The QKD nodes 1 and 2 have already provided a signature using the path "12468", while the QKD nodes 5, 7 and 8 will sign with the new path "12578".

In some advantageous embodiments, variants or refinements of embodiments of the method according to the first aspect of the invention, the method further comprises transmitting, by the QKD network controller, information about the dynamically changed key forwarding path to the end applications of the application layer. The re-routing, with the old and the new path, might be communicated by the QKD network controller to the end applications, such that during the verification of the digital signatures, these differences in paths can be correctly interpreted.

In some advantageous embodiments, variants or refinements of embodiments of the method according to the first aspect of the invention, transmitting data indicating the key forwarding path of the at least one cryptographic key comprises sending, by a QKD network controller, partial information about the routing of the at least one cryptographic key to each of the selected QKD nodes.

In these embodiments, the key forwarding path is known from the QKD network controller, so any prescription for choosing the partial path information is possible, as long as the prescription is communicated to the end applications. One prescription can consist, e.g., in providing to the key management unit j of the QKD node j information only about the key management units j-1 and j+1. In these embodiments, sending partial path information is meant to limit the exposure of the key forwarding path at certain nodes and thereby increasing the protection against third parties trying to figure out the path taken by the cryptographic key. Thus, the amount of information about the path can depend on the characteristics of the QKD nodes, e.g., it can depend on the security levels provided by each of the selected QKD nodes. In these embodiments, the full path and the partial information delivered to each of the QKD nodes (analogously, the algorithm used to select the partial path information) should be sent by the QKD network controller to the end applications for the verification of the path.

In some advantageous embodiments, variants or refinements of embodiments of the method according to the first aspect of the invention, the digital signature generated by each selected QKD node contains at least partial information about the relative order of the selected QKD nodes along the routing of the at least one cryptographic key. Information about the path can be simply an enumeration of the QKD nodes selected without specifying how these nodes are to be linked to conform the path for the key distribution. The order of the QKD nodes can however be important, e.g., to ensure security protocols. This can be easily done, for instance, by nesting the signatures. A QKD node j then signs its message $M_j$ as follows:

$$S_j = Sign[H(M_j, S_{j-1})]$$

A proof-of-order can therefore be provided together with the verification of the signatures.

In some advantageous embodiments, variants or refinements of embodiments of the method according to the first aspect of the invention, the method further comprises generating, for the distribution of D QKD keys, a D-dimensional vector of messages at each selected QKD node, wherein each entry of the D-dimensional vector is associated with one of the D QKD keys. In the case that more than one key is to be exchanged between two end applications, the method can be generalized to include as many signatures per QKD node as keys which this QKD node is involved in distributing. For instance, if the same path is taken to distribute D keys within the QKD network, the QKD node j can generate the following D signatures:

$$S_{ji}=Sign[H(M_{ji})], M_{ji}=(K_i, \text{"path"}, \text{"OID}_j\text{"}), i=1,...,D$$

and transmit an D-dimensional signature vector $\mathbf{S}_j=(S_{j1}, S_{j2}, ..., SjD)$.

The order of the keys can be specified in the signature by adding an extra byte, such that each key is correctly identified by the end application.

Alternatively, one can generate a single signature per QKD node, where the D keys appear concatenated in a single string of bits,

$$S_j=Sign[H(M_j)], M_j=(K_1K_2...K_D, \text{"path"}, \text{"OID}_j\text{"}),$$

together with information on how the single string of bits has to be partitioned to recover the different keys $K_1$ to $K_D$.

This methodology can be easily extrapolated to more general cases, where the paths for the D keys are not the same. In these cases, the resulting signature vectors generated at each QKD node have a dimensionality that depends on the number of keys that are distributed through each QKD node.

In some advantageous embodiments, variants or refinements of embodiments of the method according to the first aspect of the invention, the method further comprises generating, when D keys are to be distributed, a digital signature at each selected QKD node based on a hash chaining of the D-dimensional vector of the messages associated to each key generated at that QKD node. Instead of providing one signature for each of the D keys, in some embodiments, a hash chaining optimization can be employed and a single signature for a QKD node j can be generated as follows:

$$S_j=Sign[H(H(M_{j1}),H(M_{j2}),...,H(M_{jD}))]$$

With this hash chaining optimization one can, for instance, buffer only the hash values for the keys at the key management units of each QKD node, instead of the keys themselves. Another possible optimization based on hash chaining can be done using Merkle tree optimization. In a Merkle binary hash tree, for instance, one concatenates pairs of hashed values as a new hashed value. The initial layer of hashed functions $H(M_{j1}),H(M_{j2}),...,H(M_{jD})$ could then be reduced by a factor two in a next (upper) level of hashed values until one reaches the Merkle root, where only one hashed value is present, which contains information about the whole Merkle tree. One can then generate a digital signature based on the hashed value at the Merkle root.

In terms of bytes being sent, the distribution of D cryptographic keys involving M+1 nodes within a QKD network is summarized in the following table, where different embodiments of the present invention are compared with a key distribution without digital signatures. For simplicity, it is assumed that every key and every digital signature require b and s bytes, respectively, regardless of the QKD node.

| Key distribution modality | Bytes |
|---|---|
| Without digital signature | $b * M * D$ |
| Digital signature along key forwarding plane | $\left(b + s\,\dfrac{M+1}{2}\right) * M * D$ |
| Digital signature along key forwarding plane with hash optimization | $\left(b * D + s\,\dfrac{M+1}{2}\right) * M$ |
| Digital signature along control plane | $(b + s\,) * M * D$ |
| Digital signature along control plane with hash optimization | $(b * D + s\,) * M$ |

According to a second aspect of the present invention, a system for the verification of a key forwarding path of at least one cryptographic key is provided. The system comprises a number of QKD nodes forming a quantum key distribution, QKD, network, which are configured to receive and transmit cryptographic keys and are adapted to couple to the end applications (of an application layer). A selection of the QKD nodes, which can be performed using a centralized or a decentralized method, defines a key forwarding path.

The system of the second aspect of the present invention is characterized in that each selected QKD node is configured to receive at least data indicating at least partial (and optionally complete) information about the key forwarding path of the at least one cryptographic key, and to transmit the at least one cryptographic key with a digital signature, which contains at least the data indicating at least partial information about the key forwarding path of the at least one cryptographic key.

In some advantageous embodiments, variants or refinements of embodiments of the method according to the second aspect of the invention, the system further comprises a QKD network controller, which is adapted to exchange data with at least part of the QKD nodes and the end applications, and which is configured to generate a key forwarding path for at least one cryptographic key, wherein generating a key forwarding path comprises selecting a number of the QKD nodes.

The system according to any embodiment of the second aspect of the present invention, in particular the QKD network controller thereof, can be adapted according to any embodiments, variants or refinements of embodiments or any other options or modifications described herein with respect to the method according to the first aspect of the present invention and vice versa. This means that the QKD network controller is advantageously configured to perform the method according to any embodiment of the first aspect of the present invention with the remaining hardware and software of the system of the second aspect of the invention.

According to a third aspect, the invention provides a computer program product comprising executable program code configured to, when executed, perform the method according to any embodiment of the first aspect of the present invention.

According to a fourth aspect, the invention provides a non-transient computer-readable data storage medium comprising executable program code configured to, when executed, perform the method according to any embodiment of the first aspect of the present invention.

The non-transient computer-readable data storage medium may comprise, or consist of, any type of computer memory, in particular semiconductor memory such as a solid-state memory. The data storage medium may also comprise, or consist of, a CD, a DVD, a Blu-Ray-Disc, a USB memory stick or the like.

According to a fifth aspect, the invention provides a data stream comprising, or configured to generate, executable program code configured to, when executed, perform the method according to any embodiment of the first aspect of the present invention.

BRIEF DESCRIPTION OF THE DRAWINGS

The invention will be explained in greater detail with reference to exemplary embodiments depicted in the drawings as appended.

The accompanying drawings are included to provide a further understanding of the present invention, are incorporated in, and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts. The numbering of method steps is done for the purpose of distinguishing between them and does not necessarily imply a temporal order although a temporal order according to the numbering is possible. In particular, one or more method steps may be performed at the same time, overlapping one another and/or the like.

In the figures:

Fig. 1 shows a schematic block diagram illustrating a system for the verification of a routing of cryptographic keys according to an embodiment of the second aspect of the present invention;

Fig. 2 shows a schematic block diagram illustrating a system for the verification of a routing of cryptographic keys according to another embodiment of the second aspect of the present invention;

Fig. 3 shows a schematic block diagram illustrating a system for the verification of a routing of cryptographic keys according to yet another embodiment of the second aspect of the present invention;

Fig. 4 shows a schematic diagram illustrating the principles behind the generation of a digital signature using hash chaining techniques according to an embodiment of the present invention;

Fig. 5 shows a flow diagram schematically illustrating a method for verifying a routing of at least one cryptographic key in a quantum key distribution network according to an embodiment of the first aspect of the present invention;

Fig. 6 shows a schematic block diagram of a computer program product according to an embodiment of the third aspect of the present invention; and

Fig. 7 shows a schematic block diagram of a data storage medium according to an embodiment of the fourth aspect of the present invention.

DETAILED DESCRIPTION OF THE DRAWINGS

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

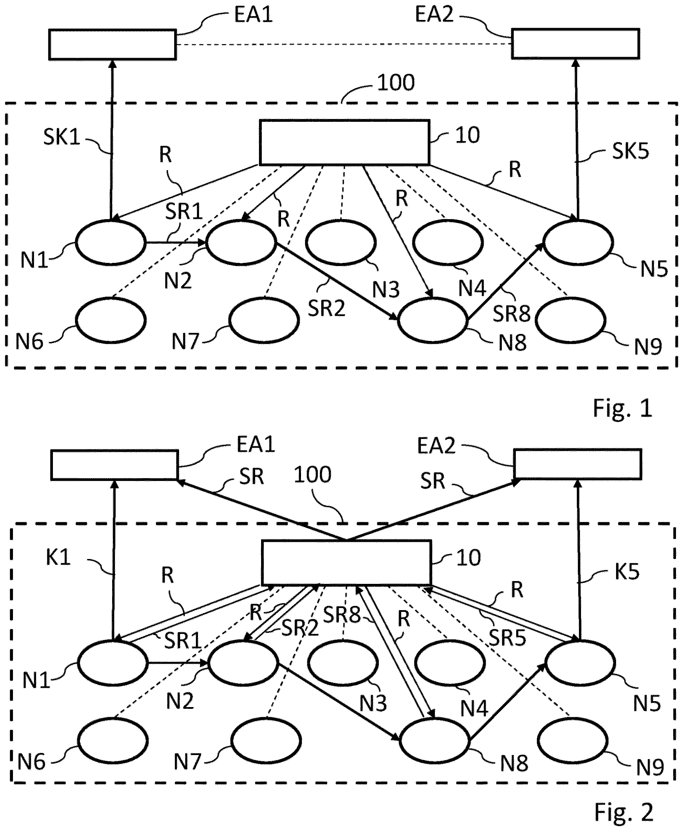

Fig. 1 shows a schematic block diagram illustrating a system 100 for the verification of a key forwarding path of cryptographic keys according to an embodiment of the second aspect of the present invention.

The system 100 of Fig. 1 comprises a QKD network controller 10 and a number of QKD nodes N1 to N9. Fig. 1 shows an architecture of a QKD network, with an infrastructure layer, where the QKD nodes N1 to N9 are, a control/management layer which comprises the QKD network controller 10 and an application layer with two end applications EA1 and EA2, connected with an application link.

The concrete number of QKD nodes N1 to N9 present in this embodiment is set for illustration. The principles of the invention set no limitations to the number of QKD nodes in the system 100. Likewise, the number of end applications EA1 and EA2 in the application layer in Fig. 1 describes a simple setting, but a larger number of end applications with arbitrary application links is also possible.

The number of QKD nodes N1 to N9 are configured to receive and transmit cryptographic keys and are adapted to couple to the application layer, where the end applications EA1 and EA2 can be used by users to establish a secure communication using the cryptographic keys distributed within the QKD network.

Each of the QKD nodes N1 to N9 is configured to hop a distributed key to another QKD node N1 to N9 through a QKD link by generating local secret keys. As already discussed before, this is a particular key forwarding protocol used here for illustration in an exemplary embodiment of the invention, but the principles of the present invention can be equally well employed when other key forwarding algorithms are chosen.

QKD nodes N1 to N9 comprise a number of devices to execute their functions, which are not shown in Fig. 1. Each QKD node N1 to N9 comprises at least a transmitter unit and a receiver unit, which can be coupled to the receiver unit and transmitter unit of other QKD nodes N1 to N9, and a number of multiplexers/demultiplexers in order to sort out the channels arriving and leaving the QKD nodes N1 to N9, and a key management unit which can store the generated keys in a database and forward them to cryptographic applications or to the key management units of other QKD nodes N1 to N9.

QKD nodes can be user nodes (belonging to the users that want to establish a secure communication) as well as relay nodes, which are configured to relay the keys in the QKD network for a cryptographic key distribution between end users. In the embodiment shown in Fig. 1, the QKD nodes N1 and N5 can be user nodes, while the QKD nodes N2 and N8 are relay nodes.

The QKD network controller 10 can be any device that can process information, such as a centralized server, possibly implemented in a cloud platform. The QKD network controller 10 is adapted to exchange data with the QKD nodes N1 to N9 and the end applications EA1 and EA2 of the application layer. The QKD network controller 10 can orchestrate the QKD nodes N1 to N9 through a selection of the QKD nodes that are to act as relay nodes in the routing of cryptographic keys within the QKD network. Such a selection of the QKD nodes depends on the characteristics of the key to be distributed, which in turn depends on the needs of the communication that the users of the end applications EA1 and EA2 want to establish. In preferred embodiments of the invention, the selection of the path proceeds after the QKD network controller 10 finds a match between the network needs of the cryptographic key to be distributed and the availability of the QKD nodes N1 to N9 that span the QKD network. In other embodiments of the invention, the routing of the cryptographic key(s) is specified by one of the end applications, typically EA1.

In the embodiment of Fig. 1, the QKD network controller 10 selects a path linking the QKD nodes N1, N2, N8 and N5. The key to be distributed is generated at the QKD node N1 and transmitted to the QKD node N2 over a secure channel using, for instance, a one-time pad communication to encrypt the key to be distributed. This involves the generation and exchange of a secret key between the QKD node N1 and the QKD node N2. A similar process happens between the QKD nodes N2 and N8 and then between the QKD nodes N8 and N5. This generation and exchange of keys takes place in the quantum layer of the QKD nodes N1, N2, N8 and N5 (not shown in Fig. 1).

According to some embodiments of the invention, the QKD network controller 10 transmits data R indicating at least partial information about the chosen key forwarding path to all the selected QKD nodes N1, N2, N8 and N5. This data R can be stored by the key management unit of each of the QKD nodes N1, N2, N8 and N5 and incorporated in the transmission signals SR1, SR2, SR8 between the selected QKD nodes N1, N2, N8 and N5, and also incorporated in the transmission signals SK1 and SK5 between the QKD nodes N1 and N5 and the end application EA1 and EA2. According to the invention, this data R indicating the at least partial information about the key forwarding path, together with the distributed key, is digitally signed by each of the selected QKD nodes N1, N2, N8 and N5. SR1, SR2 and SR8 are therefore digitally signed transmission signals comprising at least the cryptographic key to be distributed to the end applications EA1 and EA2 and some information about the route to be followed by the cryptographic key through the QKD nodes N1, N2, N8 and N5. The message to be signed at the selected QKD nodes N1, N2, N8 and N5 could therefore look like

$$M_j = (K, \text{"1285"}, \text{"Nj"}), \ j=1,2,5,8$$

where K is the cryptographic key to be distributed, "1285" signals the planned path, and the last entry of the message "Nj" is an object identifier for the QKD node j. In general, the key entry does not need to be the same for the different QKD nodes N1, N2, N8 and N5. This message is then hashed and signed, i.e., the transmission signals SRj depicted in Fig. 1 comprise each at least the signature

$$S_j = \text{Sign}[H(M_j)]$$

The hash function does not need to be the same for each of the QKD nodes N1 to N9.

This digital signature can be implemented using any public key protocol, which the end applications EA1 and EA2 can verify the path taken to distribute the cryptographic key and the integrity of the message. Verifying the signatures of the QKD nodes N1, N2, N8 and N5 thus leads to a verification that the path or route chosen by the QKD network controller 10 was indeed the one taken to distribute the cryptographic key.

Fig. 1 shows an embodiment of the invention, in which the QKD network controller 10 plays an active role in determining the key forwarding path (in a centralized way) by selecting the QKD nodes N1, N2, N8 and N5 and sending the QKD nodes N1, N2, N8 and N5 at least partial information about the key forwarding path.

However, the principles of the invention also apply when the key forwarding path is determined by any of the end applications EA1, EA2.

It falls also within the scope of the invention to determine the key forwarding path dynamically, i.e., as the key is forwarded from one QKD node to the other. In these embodiments the QKD network controller 10 does not need to be active. The end application EA1 can select N1 as the first QKD node of the key forwarding path. The QKD node N1 then (locally) selects the QKD node N2 and forwards the key to it. The QKD node N2 then selects the QKD node N8, which in turn selects the QKD node N5, which delivers the key to the end application EA2. In these embodiments, the key forwarding path is determined in a decentralized way and as the key is forwarded, i.e., the key forwarding path is not known a priori but only as the key is distributed.

In the case that more than one key has to be exchanged between the two end applications EA1 and EA2, the principles of the invention also find an application. In some embodiments of the invention, the distribution of D QKD keys can take place with the generation of a D-dimensional vector of messages at each selected QKD node N1, N2, N8, N5, where each entry of the D-dimensional vector is associated with one of the D QKD keys to be distributed. For instance, if the same path "1285" is taken to distribute D keys using the embodiment of the system 100 described in Fig. 1, each of the selected QKD nodes N1, N2, N8, N5 can generate D signatures. For instance, the QKD node N8 then can generate

$$S_{8i} = \text{Sign}[H(M_{8i})], \ M_{8i} = (K_i, \text{"1285"}, \text{"N8"}), \ i=1,...,D$$

and transmit the D-dimensional signature vector $\mathbf{S}_8 = (S_{81}, S_{82}, ..., S_{8D})$. The order of the keys can be specified in the signature by adding an extra byte, such that each key is correctly identified by the end applications EA1 and EA2.

In the embodiment shown in Fig. 1, the digital signatures follow the path chosen for the distribution of the cryptographic key. The digital signatures are thus transmitted along the key forwarding plane. In this scenario, with 4 QKD nodes, the bytes sent are given by

$$3 * D * (b + 2s)$$

where b and s are the bytes required for the transmission of each key and each digital signature, respectively.

In some alternative embodiments, one can generate a single signature for each selected QKD node N1, N2, N8, N5, where the D keys appear concatenated in a single string of bits, e.g.,

$$S_j=Sign[H(M_j)], M_j=(K_1K_2...K_D, "1285", "Nj"),$$

together with information on how the single string of bits has to be partitioned.

In some preferred embodiments of the invention, hash chaining optimization can be implemented to deal with a single signature per QKD node N1, N2, N8, N5, even when multiple keys are to be exchanged. The single signature for a selected QKD node Nj can be generated as follows:

$$S_j=Sign[H(H(M_{j1}),H(M_{j2}),...,H(M_{jD}))]$$

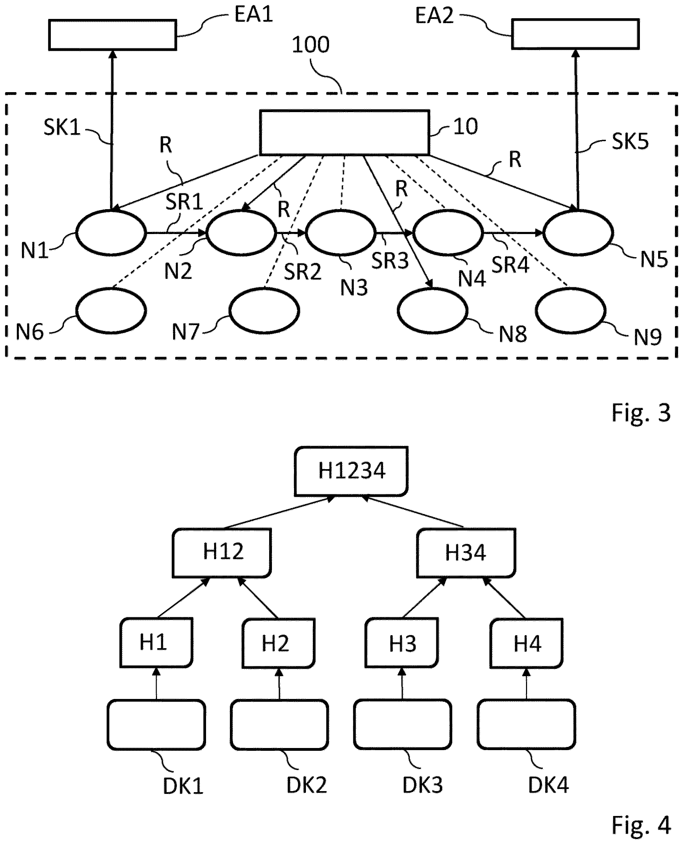

With this hash chaining optimization one can, for instance, buffer only the hash values for the keys at the key management units of each QKD node N1, N2, N8 and N5, instead of the keys themselves. An additional optimization procedure based on Merkle tree optimization is described with respect to Fig. 4. Upon hash optimization, the bytes sent get reduced to

$$3 * (b * D + 2s )$$

In another embodiment of the invention, a proof or order can be implemented. In some cases (e.g., to comply with security protocols), it is of interest to identify not just the selected QKD nodes N1, N2, N8 and N5 involved in the distribution of a cryptographic key, but to make sure that the path has been taken in the intended order. In these embodiments, the digital signatures contain the path information, e.g., the data R delivered by the QKD network controller 10, together with information about how the selected QKD nodes N1, N2, N8 and N5 are to be linked to build the chosen path. This can be easily done, for instance, by nesting the digital signatures. For instance, the QKD node N2 may sign its message $M_2$ as follows

$$S_2=Sign[H(M_2, S_1)]$$

which conveys the information that the signature of the QKD node N1 was preceding that of the QKD node N2. The same can be done with the QKD nodes N8 and N5, such that information on the ordered path can be extracted.

In some embodiments of the invention, such as the one depicted in Fig. 1, the information about the routing is the same for all the selected QKD nodes N1, N2, N8 and N5, and provides a global description of the chosen path. The data R indicating the path according to this embodiment could provide the whole chain of selected QKD nodes, e.g., "1285". According to other embodiments, not depicted in Fig. 1, only partial path information may be delivered to the selected QKD nodes N1, N2, N8 and N5.

This can be done, for instance, by providing information to the key management unit j of the QKD node j only about the key management units j-1 and j+1. According to this prescription, the path information to be delivered to the QKD node N1 would be ".2", signaling that the QKD node N1 was the first QKD node and will be followed by the QKD node N2. Likewise, the path information, R8 and R5 to be delivered to the QKD nodes N2, N8 and N5 would be, respectively, "18", "25" and "8.".

This information can be delivered by the QKD network controller 10 or generated by the QKD nodes themselves. For instance, the QKD node N8 can sign a message with path information about the preceding QKD node N2 of the key forwarding path and the QKD node N5, where the latter has been selected locally by the QKD node N8. By providing partial information about the key forwarding path, the exposure of the key forwarding path at each of the QKD nodes N1, N2, N8 and N5 can thereby be limited, increasing the protection against third parties trying to figure out the path "1285" taken by the cryptographic key.

In case the partial path information is provided by the QKD network controller 10, for the verification of the path, the full path and the partial information for each of the QKD nodes N1, N2, N8 and N5 (or, analogously, the algorithm used by the QKD network controller 10 to select the partial path information delivered to each of the QKD nodes N1, N2, N8 and N5), may be sent by the QKD network controller 10 to the end applications EA1 and EA2.

Fig. 2 shows a schematic block diagram illustrating a system 100 for the verification of a key forwarding path of cryptographic keys according to another embodiment of the second aspect of the present invention.

Fig. 2 shows the same system 100 described with respect to Fig. 1, where the QKD network controller 10 has chosen the same path, involving the QKD nodes N1, N2, N8 and N5. In Fig. 1, both the digital signatures of the QKD nodes N1, N2, N8 and N5, and the cryptographic key are distributed within the QKD network along the key forwarding path. The digital signatures and the cryptographic key are thus both transmitted along the key forwarding plane.

In Fig. 2, an alternative embodiment is described. According to this embodiment, the digital signed transmission signals SR1, SR2, SR8 and SR5 involve the information about the data R indicating the routing but not about the cryptographic key, and are sent by each of the selected QKD nodes N1, N2, N8 and N5 to the QKD network controller 10, which can then assemble them in a signal SR, to be transmitted to the end applications EA1 and EA2. This embodiment decouples the path followed by the different digital signatures from the path followed by the distributed cryptographic key.

The cryptographic key is distributed along the key forwarding plane, while the digital signatures are transmitted along the control plane. This has the advantage that the different QKD nodes N1, N2, N8 and N5 do not need to carry the digital signatures of the nodes preceding them in the path, which can optimize capacity resources of the selected QKD nodes N1, N2, N8 and N5. In case one of the selected QKD nodes N1, N2, N8 and N5 cannot be verified, measures can be taken by the QKD network controller 10 to establish an alternative routing of the distributed key.

In this embodiment, with 4 QKD nodes, the bytes sent are given by

$$3 * D * (b + s)$$

which, upon hash optimization, can be reduced to

$$3 * (b * D + s)$$

Fig. 3 shows a schematic block diagram illustrating a system 100 for the verification of a routing of cryptographic keys according to yet another embodiment of the second aspect of the present invention.

Fig. 3 shows an example of a dynamical re-routing of the path to be followed by the cryptographic key performed by the QKD network controller 10. This is especially advantageous if a selected QKD node N1 to N9 becomes unavailable, or its anticipated availability can no longer be fulfilled. In these cases, the QKD network controller 10 can obtain a QKD network condition indicating the unavailability of a QKD node N1-N9 and plan a re-routing of the key distribution in real time, i.e., once the distribution of the cryptographic key has already started, where at least the affected QKD node/s is/are replaced.

For concreteness, suppose that the initial path determined by the QKD network controller 10 was the one of Figs. 1 and 2, i.e., "1285". While distributing the cryptographic key, the QKD node N8 turns out to be unavailable. The new route "12345" shown in Fig. 3 is then dynamically planned by the QKD network controller 10 based on an obtained QKD network condition (in this case, the QKD node N8 becoming unavailable). The QKD nodes N1 and N2 have already provided a signature using the initial path "1285".

The QKD network controller 10 is adapted to send information to the newly selected QKD nodes N3 and N4 about the new path "12345", disable the QKD node N8 and update the already selected QKD node N5 with the new path "12345". Thus, the QKD nodes N3, N4 and N5 will sign with the new path "12345". In some preferred embodiments of the invention, the QKD network controller 10 can additionally send information to the end applications EA1 and EA2 about the dynamically changed route, in order that these differences in paths in the digital signatures can be correctly interpreted by the end applications EA1 and EA2 when verifying the signatures and not ascribed, e.g., to a third-party action.

Fig. 4 shows a schematic diagram illustrating the principles behind the generation of a digital signature using hash chaining techniques according to an embodiment of the present invention.

Fig. 4 shows a hash chaining optimization using a Merkle binary hash tree for the case where 4 keys have to be exchanged. The diagram in Fig. 4 shows four data key information blocks DK1 to DK4 associated with the different keys in a selected QKD node j. These data key information blocks DK1 to DK4 can comprise the information

$$M_{ji=}(K_i, \text{"path"}, \text{"OID}_j\text{"}), i=1,...,4$$

In a Merkle binary hash tree one concatenates pairs of hashed values as a new hashed value. In an initial layer of hashed functions, the information about the keys is hashed. H1, H2, H3 and H4 in Fig. 4 respectively stand for the hash functions $H(M_{j1})$, $H(M_{j2})$, $H(M_{j3})$, $H(M_{j4})$. In an additional layer the hashed values are pairwise hashed. H1 and H2 are hashed into H12, while H3 and H4 are hashed into H34. In other words, H12 stands for $H(H(M_{j1}), H(M_{j2}))$ and H34 for $H(H(M_{j3}), H(M_{j4}))$. In another layer the hashed values H12 and H34 are hashed into one H1234=$H($H12, H34$)$. The hashing iteration finishes when the reduction leads to only one hash value. This final layer is the Merkle root layer, where only one hashed value is present, which contains information about the whole Merkle tree. Based on the hashed value H1234, the key management unit j of the QKD node j can then generate a digital signature

$$S_j = \text{Sign[H1234]}$$

to be transmitted to the QKD network controller 10, the end applications EA1 and EA2 or another QKD node, depending on the embodiment of the invention. The verification of the keys involves the computation of the Merkle trees with the hash function and thereby the verification of the signature $S_j$.

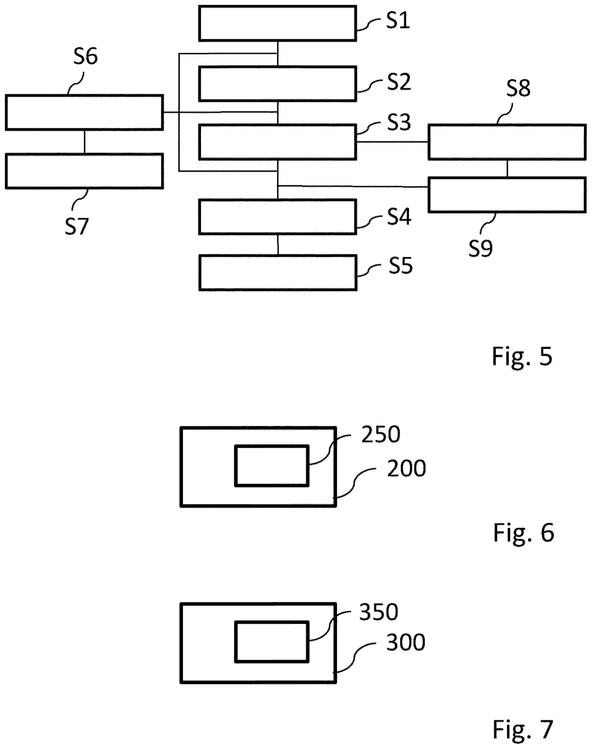

Fig. 5 shows a flow diagram schematically illustrating a method for verifying the key forwarding path of at least one cryptographic key in a quantum key distribution network according to an embodiment of the first aspect of the present invention. The method can be preferably implemented by the system 100 described in Fig. 1. For clarity, reference will be made to the elements described in Fig. 1.

In a step S1, a number of QKD nodes N1 to N9 of a quantum key distribution network are selected in order to distribute at least a cryptographic key between end applications EA1 and EA2. In the embodiment of Fig. 1, the selected QKD nodes are N1, N2, N8 and N5. This selection of QKD nodes can be done by the QKD network controller 10, by any of the end applications EA1 and EA2, or it can be locally done by each QKD node as the key is being distributed within the QKD network. These possibilities have been already discussed above in relation with Fig. 1.

In a step S2, data R indicating at least partial information about the key forwarding path is transmitted to the selected QKD nodes. This data R can comprise, e.g., identifiers for the different selected QKD nodes. Taking as an example the embodiment described in Fig. 1, the data R indicating the key distribution path could be "1285", and could be sent by the QKD network controller 10. This information is sent to all the selected QKD nodes N1, N2, N8 and N5.

As described in connection with Fig. 1, the information about the path does not need to comprise the whole path and does not need to be the same for the different QKD nodes N1, N2, N8 and N5. The transmission of partial information about the path is also foreseen in this invention in order to reduce the exposure of the path. For the different embodiments in this respect, we refer to the description in relation with Fig. 1.

In a step S3, each of the selected QKD nodes generates a digital signature containing at least the data R indicating at least partial information about the QKD nodes involved in the routing of the at least one cryptographic key. In the embodiment of Fig. 1, the illustrated transmission signals SK1, SR1, SR2, SR8 and SK5 are thus digitally signed. In some other embodiments, for instance those described in relation with Fig. 2, the digital signature does not contain the distributed key and is sent by each of the QKD nodes N1, N2, N8 and N5 to the QKD network controller 10.

In a step S4, the digital signature generated at a selected QKD node is transmitted by the corresponding QKD node. Depending on the embodiment of the invention, the transmission can be forwarded to another of the selected nodes following the key forwarding plane, to the QKD controller 10 or to the end applications EA1, EA2.

In a step S5, the key forwarding path chosen for a cryptographic key can be authenticated through the verification of the digital signatures transmitted by each of the selected QKD nodes. This can be done by generating public-key pairs, generating the digital signature with a private key and giving the public key to the end applications EA1 and EA2.

In a step S6, based on an obtained QKD network condition, the routing of the cryptographic key can be dynamically changed by the QKD network controller 10 by selecting at least partially different QKD nodes based on the obtained QKD network condition. This re-routing of the key distribution takes place in real time, i.e., once the distribution of the cryptographic key has already started. This dynamical re-routing involves sending information by the QKD network controller 10 to the newly selected QKD nodes about the new path, but also disabling no longer needed QKD nodes and updating already selected QKD nodes with the new key forwarding path. A description of a dynamical change of the routing is provided with reference to Fig. 3.

In a step S7, information about the dynamically changed routing of step S6 is transmitted to an application layer, such that during the path verification the dynamically changed path can be correctly interpreted.

In a step S8, for the distribution of multiple N cryptographic keys, a D-dimensional vector of messages at each selected QKD node is generated, where each entry (message) of the D-dimensional vector is associated with one of the D QKD keys to be distributed.

In a step S9, a digital signature at each QKD node is generated based on a hash chaining of the D-dimensional vector of messages generated at each QKD node in step S8. This hash chaining optimization can be performed in different ways, e.g., following a Merkle tree optimization, as described in relation with Fig. 4.

Fig. 6 shows a schematic block diagram illustrating a computer program product 200 according to an embodiment of the third aspect of the present invention. The computer program product 200 comprises executable program code 250 configured to, when executed, perform the method according to any embodiment of the first aspect of the present invention, in particular as has been described with respect to the preceding figures.

Fig. 7 shows a schematic block diagram illustrating a non-transitory computer-readable data storage medium 300 according to an embodiment of the fourth aspect of the present invention. The data storage medium 300 comprises executable program code 350 configured to, when executed, perform the method according to any embodiment of the first aspect of the present invention, in particular as has been described with respect to the preceding figures.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated.

**EP 4 704 366 A1**

List of reference signs

10      QKD network controller

100    system
200    computer program product
250    program code
300    data storage medium
350    program code

EA1,EA2      end applications
N1..N9         QKD nodes
R                   data indicating the routing
SK1,SK5      transmission signals QKD node to end application
SR1..SR8     transmission signals QKD node to QKD node
S1..S9         method steps

**Claims**

1.  A method for verifying a key forwarding path of at least one cryptographic key in a quantum key distribution, QKD, network, the method comprising at least steps of:

    selecting (S1) a number of QKD nodes (N1-N9) of the QKD network, which define a key forwarding path of the at least one cryptographic key;
    transmitting (S2) to each of the selected QKD nodes (N1-N9) data (R) indicating at least partial information about the key forwarding path of the at least one cryptographic key;
    generating (S3), by each selected QKD node (N1-N9), a digital signature, wherein the digital signature contains at least the data (R) indicating at least partial information about the key forwarding path of the at least one cryptographic key;
    transmitting (S4), by each selected QKD node (N1-N9), the digital signature generated at that selected QKD node (N1-N9); and
    verifying (S5) the key forwarding path of the at least one cryptographic key through a verification of the transmitted digital signatures.

2.  The method of claim 1,
    wherein each digital signature comprises information about the at least one cryptographic key, a public identifier of the QKD node (N1-N9) that generated the digital signature, and at least information about the preceding and the succeeding QKD node along the key forwarding path.

3.  The method according to any of the preceding claims,
    wherein the key forwarding path of the at least one cryptographic key is specified by one of the end applications (EA1, EA2), or by a QKD network controller.

4.  The method according to any of the preceding claims,
    wherein the key forwarding path of the at least one cryptographic key is specified dynamically, wherein each of the selected QKD nodes (N1-N9) is configured to locally select the succeeding QKD node (N1-N9) along the key forwarding path.

5.  The method according to any of the preceding claims,
    wherein each of the selected QKD nodes (N1-N9) transmits at least the digital signature it generated to another selected QKD node (N1-N9) according to the key forwarding path.

6.  The method according to any of the preceding claims,
    wherein each of the selected QKD nodes (N1-N9) transmits the generated digital signature to a QKD network controller (10).

**7.** The method according to any of the preceding claims,
further comprising:

obtaining at least one QKD network condition by a QKD network controller (10); and
dynamically changing (S6) the key forwarding path by selecting, at least partially, different QKD nodes (N1-N9) based on the at least one obtained QKD network condition.

**8.** The method of claim 7,
further comprising:

transmitting (S7), by the QKD network controller (10),
information about the dynamically changed key forwarding path to end applications (EA1, EA2).

**9.** The method according to any of the preceding claims,
wherein the digital signature generated by each selected QKD node (N1-N9) contains at least partial information about the relative order of the selected QKD nodes (N1-N9) along the key forwarding path of the at least one cryptographic key.

**10.** The method according to any of the preceding claims,
further comprising:
generating (S8), for the distribution of D QKD keys, a D-dimensional vector of messages at each selected QKD node (N1-N9), wherein each entry of the D-dimensional vector is associated with one of the D QKD keys.

**11.** The method of claim 10,
further comprising:
generating (S9) a digital signature at each selected QKD node (N1-N9) based on a hash chaining of the D-dimensional vector of the messages associated to each key generated at that QKD node (N1-N9).

**12.** A system (100) for the verification of a key forwarding path of at least one cryptographic key, the system (100) comprising:

a number of QKD nodes (N1-N9) forming a quantum key distribution, QKD, network, which are configured to receive and transmit cryptographic keys and are adapted to couple to end applications (EA1, EA2),
wherein a selection of the QKD nodes (N1-N9) define a key forwarding path;
**characterized in that**
each selected QKD node (N1-N9) is configured to receive data (R) indicating at least partial information about the key forwarding path of the at least one cryptographic key, and to transmit the at least one cryptographic key using a digital signature,
wherein the digital signature contains at least the data (R) indicating at least partial information about the key forwarding path of the at least one cryptographic key.

**13.** The system (100) of claim 12, further comprising a QKD network controller (10), which is adapted to exchange data with at least part of the QKD nodes (N1-N9) and the end applications (EA1, EA2), and which is configured to generate a key forwarding path for at least one cryptographic key, wherein generating a key forwarding path comprises selecting a number of the QKD nodes (N1-N9).

**14.** The system (100) of claim 13,
wherein the QKD network controller (10) is further configured to obtain at least one network condition and to dynamically change the key forwarding path of the cryptographic key by selecting, at least partially, different QKD nodes (N1-N9) based on the at least one obtained QKD network condition.

**15.** Computer program product (200) comprising executable program code (250) configured to, when executed, perform the method according to claim 1.

Fig. 1

Fig. 2

Fig. 3

Fig. 4

Fig. 5

Fig. 6

Fig. 7

**Europäisches Patentamt**
**European Patent Office**
**Office européen des brevets**

# EUROPEAN SEARCH REPORT

**Application Number**

EP 24 19 6525

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 367 161 A (CHENGDU LIANGAN BLOCK CHAIN TECH CO LTD) 12 February 2021 (2021-02-12) | 1-10, 12-15 | INV. H04L9/08 H04L9/32 |
| Y | * figures 1-9 * * paragraph [0017] - paragraph [0050] * | 11 | H04L9/00 H04L9/40 |
| X | CN 110 690 960 A (CHENGDU LIANGAN BLOCK CHAIN TECH CO LTD) 14 January 2020 (2020-01-14) | 1-10, 12-15 | |
| Y | * figures 2-6,8 * * paragraph [0016] - paragraph [0048] * | 11 | |
| Y | SHARMA PURVA ET AL: "Securing Optical Networks Using Quantum-Secured Blockchain: An Overview", SENSORS, vol. 23, no. 3, 20 January 2023 (2023-01-20), page 1228, XP093246400, CH ISSN: 1424-8220, DOI: 10.3390/s23031228 * paragraph [0003] - paragraph [0005] * | 11 | |
| A | NL 2 026 015 B1 (UNIV DELFT TECH [NL]) 11 March 2022 (2022-03-11) * figures 1-3,5 * * page 5, line 19 - page 34, line 10 * | 1-15 | **TECHNICAL FIELDS SEARCHED (IPC)** H04L |
| A | US 2024/235825 A1 (SOHN IL KWON [KR] ET AL) 11 July 2024 (2024-07-11) * figures 1,2 * * paragraph [0006] - paragraph [0046] * | 1-15 | |

The present search report has been drawn up for all claims

| Place of search | Date of completion of the search | Examiner |
|---|---|---|
| Munich | 10 February 2025 | Bec, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 6525

10-02-2025

| Patent document cited in search report | | Publication date | Patent family member(s) | | Publication date |
|---|---|---|---|---|---|
| CN 112367161 | A | 12-02-2021 | NONE | | |
| CN 110690960 | A | 14-01-2020 | NONE | | |
| NL 2026015 | B1 | 11-03-2022 | NONE | | |
| US 2024235825 | A1 | 11-07-2024 | JP | 7605910 B2 | 24-12-2024 |
| | | | JP | 2024098478 A | 23-07-2024 |
| | | | KR | 20240111499 A | 17-07-2024 |
| | | | US | 2024235825 A1 | 11-07-2024 |